# EUROPEAN PATENT APPLICATION

(11) **EP 3 964 714 A1**
(43) Date of publication of application: **09.03.2022**
(21) Application number: 20913905.4
(22) Date of filing: 11.12.2020
(51) Int. Cl.: F04D 25/06, F04D 29/056, F04D 29/40

(54) **GAS COMPRESSOR, ROTOR SYSTEM, AND MICRO GAS TURBINE**

(30) Priority: 19.01.2020 CN 202010062945
(71) Applicant: Technologies' Xanadu Of Resonatory-solar-systemed Co., Ltd, Beijing 100029 (CN)
(72) Inventor: JIN, Pu, Beijing 100176 (CN)
(74) Representative: Petculescu, Ana-Maria
(86) International application number: PCT/CN2020/135903
(87) International publication number: WO 2021/143417

(57) **Abstract**

A compressor includes a rotor (1), a stator (41), a coil (42), a shell, an impeller (2) and at least one main gas passage, where the stator (41) and the coil (42) are sleeved on the rotor (1), the shell covers the stator (41) and the coil (42), the shell is enclosed at a tail end of the compressor to form a high-pressure chamber, the impeller (2) is sleeved at a tail end of the rotor (1) and faces toward a gas intake direction, the main gas passage surrounds the stator (41), and an outlet at a tail end of the main gas passage is connected to the high-pressure chamber through the impeller (2). The compressor can solve the technical problems of complex structure, large size and hard heat dissipation of the existing compressor. A rotor system and a microturbine including the compressor are provided.

## Description

### TECHNICAL FIELD

The present disclosure relates to the technical field of compressors, and in particular, to a compressor, a rotor system and a microturbine.

### BACKGROUND

The compressor is a component used to increase the pressure of the gas (usually air) with high-speed rotating blades working. The existing compressor has the following defects. Since the compressor is driven by a motor, the rotation of a rotor in the motor will generate a large amount of heat, and the rotor having a temperature greater than a service temperature of the permanent magnet material will be demagnetized. Consequently, the efficiency of the motor is obviously reduced, the service life of the motor is affected, and the reliability of the motor cannot be ensured effectively.

The existing compressor has an unreasonable structure. Specifically, the compressor is mostly cooled by a cooling fan on the rotor, which increases the number of parts, makes the process more difficult, and leads to the problems of having a large size, high temperature and difficult heat dissipation. Since the temperature of the motor directly determines the service life of the motor, a reasonable cooling method and a cooling structure are necessary to prolong the service life of the motor.

### SUMMARY

An objective of the present disclosure is to provide a compressor, a rotor system and a microturbine, to solve the above technical problems. The present disclosure can solve the technical problems of complex structure, large size and hard heat dissipation of the existing compressor.

The present disclosure uses the following technical solutions:
According to an aspect of the present disclosure, a compressor is provided, including: a rotor, a stator, a coil, a shell, an impeller and at least one main gas passage, where
the stator and the coil are sleeved on the rotor, the shell covers the stator and the coil, the shell is enclosed at a tail end of the compressor to form a high-pressure chamber, the impeller is sleeved at a tail end of the rotor and faces toward a gas intake direction, the main gas passage surrounds the stator, and an outlet at a tail end of the main gas passage is connected to the high-pressure chamber through the impeller.

Further, the shell may include a first shell, a second shell and a third shell, and the main gas passage may include a first gas passage or/and a third gas passage;
the first shell may cover the stator and the coil, the stator may be fixed with the first shell, a front end and a tail end of the first shell may be respectively provided with a first front end cover and a first rear end cover, the second shell may surround the first shell, a second end cover may be provided at a tail end of the second shell, and the third shell may be provided at the tail end of the compressor, and enclosed with the second end cover to form the high-pressure chamber;
a chamber between the first shell and the second shell, and a chamber between the first rear end cover and the second end cover may be formed into the first gas passage; and
the third gas passage may axially penetrate through the stator.

Further, the compressor may further include a second gas passage; and
a clearance between the stator and the coil and an outer wall of the rotor, a clearance between the stator and the coil and the first front end cover, and a clearance between the stator and the coil and the first rear end cover may be formed into the second gas passage, and the second gas passage may include an inlet provided at a front end of the first shell or on the first front end cover, and an outlet provided on the first rear end cover and communicating with the first gas passage or/and the third gas passage.

Further, a radial bearing may be provided at two ends of the rotor to support the stator; and the radial bearing may be one of a static pressure gas bearing, a dynamic pressure gas bearing or a dynamic and static pressure hybrid gas bearing.

Further, an annular rubber ring damper may be sleeved at two ends of the radial bearing.

Further, a gas intake end of the rotor may be provided with a first thrust collar and a second thrust collar, the two thrust collars each may include a collar portion and a bushing portion, the bushing portion of each of the two thrust collars may be fixed on the rotor by docking, a thrust groove may be formed between an inner end surface of each of the two thrust collars and an outer portion of the bushing portion, and a thrust bearing may be provided in the thrust groove; and
two sides of a portion, protruded out of the thrust groove, of a top of the thrust bearing may be respectively clamped by a cover and the shell, and the cover may be fixedly connected to the shell.

Further, the thrust bearing may be a dynamic and static pressure hybrid air bearing; and
the thrust bearing may include a first thrust portion and a second thrust portion, the first thrust portion may be opposite to the second thrust portion, an annular chamber may be formed in an inside end surface of the second thrust portion, and the annular chamber may communicate with an external gas; and a first clearance between an inside end surface of the first thrust collar and an outside end surface of the first thrust portion may communicate with the annular chamber through a gas hole, a second clearance between an inside end surface of the second thrust collar and an outside end surface of the second thrust portion may communicate with the annular chamber through a gas hole, a third clearance between an inner sidewall of the second thrust portion and a sidewall of the thrust groove may communicate with the annular chamber through a gas hole, and a gas intake pipe on the shell may communicate with the annular chamber through a gas intake passage on the second thrust portion.

Further, a spring damper or a rubber ring damper may be provided between an outer end surface of the first thrust portion and the cover, and between an outer end surface of the second thrust portion and the shell; and/or
a spring damper or a rubber ring damper may be provided between an inner end surface of the first thrust portion and an inner end surface of the second thrust portion.

Further, an air slot may be formed in the outer end surface of each of the first thrust portion and the second thrust portion; and/or an air slot may be formed in a surface, opposite to the outer end surface of each of the first thrust portion and the second thrust portion, of each of the two thrust collars.

According to another aspect of the present disclosure, a rotor system is provided, including the above compressor.

According to another aspect of the present disclosure, a microturbine is provided, including the above compressor.

Compared with the prior art, the present disclosure has the following beneficial effects:
1. With the impeller, the motor and the cooling structure on a same side, the compressor is structured compactly; and with the main gas passage surrounding the stator, the present disclosure further optimizes the structure, does not need to individually provide the main gas intake pipe, and makes the weight of the complete machine distributed uniformly, thereby enhancing the balance and stability.
2. The gas in the main gas passage of the compressor in the present disclosure can take a cooling effect, the external cooling gas can further cool the motor, and at last the multiple paths of gases can be combined to feed to a worm gear of the compressor, thereby saving the gas consumption; and without the cooling fan on the shaft, the structure is simpler and more reliable.
3. As both the thrust bearing and the radial bearing use the air bearing, the present disclosure can ensure the high-speed stable operation of the compressor; with the air slot, the present disclosure can implement quick circulation of the air in the bearing, transfer the gas in the compressor and prevent the blockage and accumulation of the air; and the present disclosure flexibly selects the static pressure mode or the dynamic pressure mode according to a gas condition, and thus is used flexibly.
4. As the thrust collars on two sides of the thrust groove are low, the compressor reduces the turning amount and the material consumption in machining, has a relatively simple process and a relatively uniform weight distribution, and yields better stability in high-speed rotation of the rotary shaft.
5. The compressor of the present disclosure can be used in any rotor system or microturbine to provide the high-pressure gas, and can solve the technical problems of complex structure, large size and hard heat dissipation of the rotor system or the microturbine.

### BRIEF DESCRIPTION OF THE DRAWINGS

FIG. 1 is a schematic structural view of a compressor according to an embodiment of the present disclosure.
FIG. 2 is a structural sectional view of a stator and a coil according to an embodiment of the present disclosure.
FIG. 3 is a schematic structural view of a stator according to an embodiment of the present disclosure.
FIG. 4 is a schematic structural view of a thrust bearing according to an embodiment of the present disclosure.

### DETAILED DESCRIPTION OF THE EMBODIMENTS

In order to better understand the technical solutions of the present disclosure, the present disclosure is further described below with reference to specific embodiments and accompanying drawings.

An embodiment of the present disclosure provides a compressor.

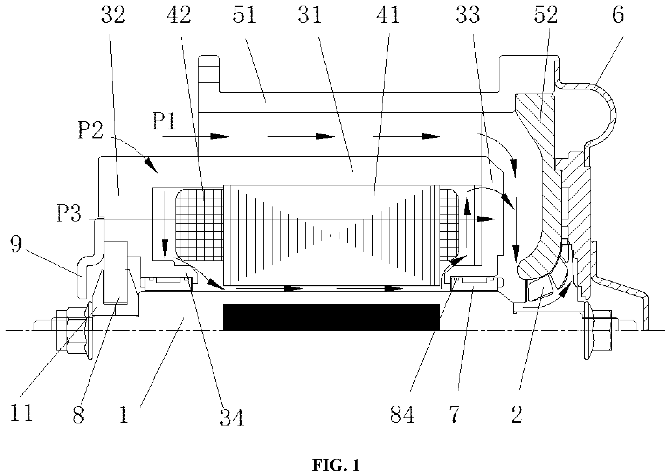

As shown in FIG. 1, the compressor includes: a rotor 1, a stator 41, a coil 42, a shell, an impeller 2 and at least one main gas passage, where the stator 41 and the coil 42 are sleeved on the rotor 1, the shell covers the stator 41 and the coil 42, the shell is enclosed at a tail end of the compressor to form a high-pressure chamber, the impeller 2 is sleeved at a tail end of the rotor 1 and faces toward a gas intake direction, the main gas passage surrounds the stator 41, and an outlet at a tail end of the main gas passage is connected to the high-pressure chamber through the impeller 2.

In the embodiment, with the impeller 2, the motor (the stator 41 and the coil 42) and the cooling structure (the main gas passage) on a same side, the compressor is structured compactly; and with the main gas passage surrounding the stator 41 in the embodiment, the present disclosure further optimizes the structure, does not need to individually provide the main gas intake pipe, and makes the weight of the complete machine distributed uniformly, thereby enhancing the balance and stability.

According to the specific structure of the compressor provided by the embodiment of the present disclosure, the main gas passage includes a first gas passage P1 and a second gas passage P2.

As shown in FIG. 1, the compressor includes a rotor 1, a stator 41, a coil 42, a first shell 31, a second shell 51, an impeller 2, and a third shell 6, where the stator 41 and the stator 42 are sleeved on the rotor 1, the first shell 31 covers the stator 41 and the coil 42, the stator 41 is fixed with the first shell 31, a front end and a tail end of the first shell 31 are respectively provided with a first front end cover 32 and a first rear end cover 33, the second shell 51 surrounds the first shell 31, a second end cover 52 is provided at a tail end of the second shell 51, and the third shell 6 is provided at the tail end of the compressor, and enclosed with the second end cover 52 to form a high-pressure chamber.

The first gas passage P1 includes a chamber between the first shell 31 and the second shell 51, and a chamber between the first rear end cover 33 and the second end cover 52, and the first gas passage P1 serves as a main gas intake passage.

The second gas passage P2 includes a clearance between the stator 41 and the coil 42 and an outer wall of the rotor 1, a clearance between the stator 41 and the coil 42 and the first front end cover 32, and a clearance between the stator 41 and the coil 42 and the first rear end cover 33; and the second gas passage P2 serves as a cooling gas passage. The second gas passage P2 is provided with an inlet at a front end of the first shell 31 or on the first front end cover 32, and an outlet on the first rear end cover 33; and cold air enters the first gas passage P1 through the outlet of the second gas passage P2.

The impeller 2 is sleeved at a tail end of the rotor 1, and faces toward a gas intake direction, and a clearance is provided between blades of the impeller 2 and conical barrels of the second end cover 52, such that while the rotor 1 rotates, the gas flowing through the clearance between the blades from the tail end of the first gas passage P1 is compressed to enter the high-pressure chamber.

In the embodiment, the gas in the main gas passage of the compressor can take a cooling effect, the external cooling gas can further cool the motor, and at last the two paths of gases can be combined to feed to a worm gear of the compressor, thereby saving the gas consumption; and without the cooling fan on the shaft, the structure is simpler and more reliable.

Preferably, according to the specific structure of the compressor provided by the embodiment of the present disclosure, the main gas passage further includes a third gas passage P3. The third gas passage P3 axially penetrates through the stator 41, and is connected to the first gas passage P1. The third gas passage P3 may also serve as the main gas intake passage, and can increase the gas intake amount. The third gas passage P3 is close to the rotor 1, with the desirable auxiliary cooling and heat dissipation effect.

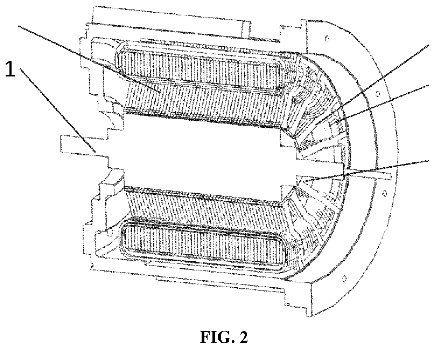

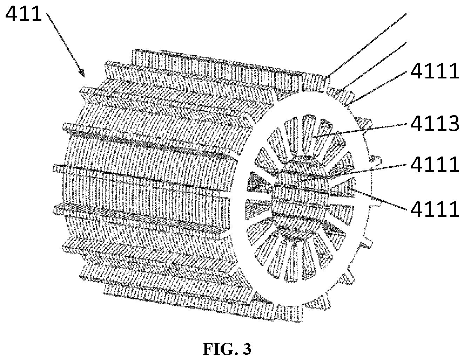

Specifically, as shown in FIG. 2 and FIG. 3, the stator 41 includes a stator core 411, the stator core 411 is of a cylinder, and a through hole 4111 for mounting the rotor is formed at a center of the cylinder. Multiple first winding separator plates 4112 extending outward along an axial direction and a radial direction of the cylinder and arranged uniformly along a periphery of the cylinder are provided on an outer diameter side of the stator core 411, multiple second winding separator plates 4113 extending inward along the axial direction and the radial direction of the cylinder and arranged uniformly along the periphery of the cylinder are provided on an inner diameter side of the stator core 411, and certain ends of the second winding separator plates 4113 close to the center of the cylinder are formed into the through hole 4111. The first winding separator plates 4112 and the second winding separator plates 4113 are opposite to each other on the outer diameter side and the inner diameter side of the cylinder, two adjacent first winding separator plates 4112 are formed into an outer wiring duct 4114 with an outer peripheral surface of the cylinder, two adjacent second winding separator plates 4113 are formed into an inner wiring duct 4115 with an inner peripheral surface of the cylinder, the coil 42 is wound in the outer wiring duct 4114 and the inner wiring duct 4115 along the axial direction of the cylinder, and the coil 42 and two adjacent second winding separator plates 4113 are formed into the third gas passage P3. Optionally, the stator iron core 411 may be made of multiple identical silicon steel sheets 4116 by superimposing and pressing along the axial direction of the cylinder.

Meanwhile, for ease of heat dissipation of the stator 41 and the rotor 1 and gas intake of the third gas passage P3, a netlike gas hole may be formed in the first front end cover and the first rear end cover.

The embodiment of the present disclosure further provides a radial support structure, namely a radial bearing 7 is provided on the rotor 1 to support the stator 41.

As shown in FIG. 1, specifically, the first front end cover 32 and the first rear end cover 33 each are provided with an integrated support ring 34 near the rotor 1 and around the rotor 1, and the radial bearing 7 is provided between the support ring 34 and the rotor 1. As the support ring 34 is fixed with the stator 41, the radial bearing 7 is used to support the stator 41.

Further, the radial bearing 7 may be any one of a static pressure gas bearing, a dynamic pressure gas bearing or a dynamic and static pressure hybrid gas bearing.

In response to the static pressure gas bearing, the radial bearing 7 keeps a predetermined radial clearance with the rotor 1 in the radial direction, an annular chamber is provided between a periphery of the radial bearing 7 and the support ring 34, a through hole penetrating through the annular chamber and the radial clearance is formed in the bottom of the annular chamber, and a gas inlet for communicating the annular chamber and the external gas is also formed in the support ring 34.

In response to the dynamic pressure gas bearing, the radial bearing 7 keeps a predetermined radial clearance with the rotor 1 in the radial direction, and a dynamic pressure generation groove is formed in an inner diameter surface of the radial bearing 7 or a portion of the rotor 1 for providing the radial bearing 7.

The dynamic and static pressure hybrid gas bearing has the characteristics of the static pressure gas bearing and the dynamic pressure gas bearing.

Further, an annular rubber ring damper 84 is sleeved at two ends of the radial bearing 7, to stably support the radial bearing 7.

The embodiment of the present disclosure further provides an axial support structure, namely a thrust bearing 8 is provided on the rotor 1.

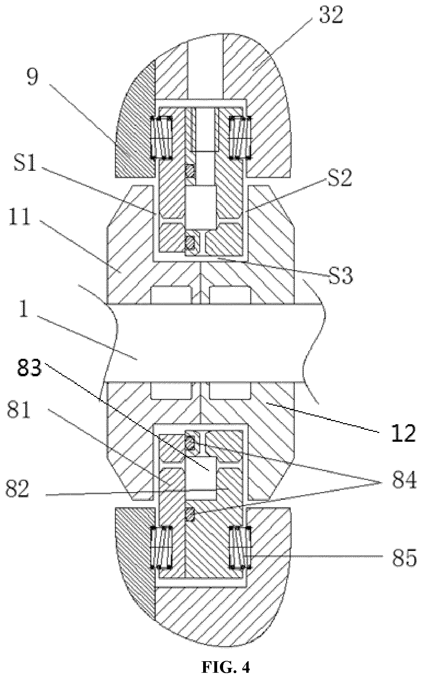

As shown in FIG. 1 and FIG. 4, specifically, a gas intake end of the rotor 1 is provided with two thrust collars, namely a first thrust collar 11 and a second thrust collar 12, the first thrust collar 11 and the second thrust collar 12 each include a collar portion and a bushing portion, the bushing portion of each of the two thrust collars is fixed on the rotor 1 by docking, a thrust groove is formed between an inner end surface of each of the two thrust collars and an outer portion of the bushing portion, a thrust bearing 8 is provided in the thrust groove, two sides of a portion, protruded out of the thrust groove, of a top of the thrust bearing 8 are respectively clamped by a cover 9 and the first front end cover 32, and the cover 9 is fixed with the first front end cover 32. The thrust bearing 8 is a dynamic and static pressure hybrid air bearing.

As shown in FIG. 4, the thrust bearing 8 in the embodiment includes a first thrust portion 81 and a second thrust portion 82, the first thrust portion 81 is opposite to the second thrust portion 82, an annular chamber 83 is formed in an inside end surface of the second thrust portion 82, and the annular chamber 83 communicates with an external gas; and a clearance S1 between an inside end surface of the first thrust collar 11 and an outside end surface of the first thrust portion 81 communicates with the annular chamber 83 through a gas hole, a clearance S2 between an inside end surface of the second thrust collar 12 and an outside end surface of the second thrust portion communicates with the annular chamber 83 through a gas hole, a clearance S3 between an inner sidewall of the second thrust portion 82 and a sidewall of the thrust groove communicates with the annular chamber 83 through a gas hole, and a gas intake pipe on the first front end cover 32 communicates with the annular chamber through a gas intake passage on the second thrust portion 82.

Further, a spring damper 85 or a rubber ring damper 84 is provided between an outer end surface of the first thrust portion 81 and the cover 9, and between an outer end surface of the second thrust portion 82 and the first front end cover 32, to absorb vibration energy and function as the damper.

Further, a spring damper 85 or a rubber ring damper 84 is provided between an inner end surface of the first thrust portion 81 and an inner end surface of the second thrust portion 82, to reduce vibration, absorb energy and seal the gas.

Further, an air slot is formed in the outer end surface of each of the first thrust portion 81 and the second thrust portion 82; and/or an air slot is formed in a surface, opposite to the outer end surface of each of the first thrust portion 81 and the second thrust portion 82, of each of the two thrust collars.

In the embodiment, with the air slot, the present disclosure can implement quick circulation of the air in the bearing, transfer the gas in the compressor and prevent the blockage and accumulation of the air; and the present disclosure flexibly selects the static pressure mode or the dynamic pressure mode according to a gas condition, and thus is used flexibly. As the thrust collars on two sides of the thrust groove are low, the compressor reduces the turning amount and the material consumption in machining, has a relatively simple process and a relatively uniform weight distribution, and yields better stability in high-speed rotation of the rotary shaft.

An embodiment of the present disclosure further provides a rotor system, where the rotor system uses the above compressor.

An embodiment of the present disclosure further provides a microturbine, where the microturbine uses the above compressor, and the compressor is used to provide a high-pressure gas for the microturbine.

The above description is merely an illustration of preferred embodiments of this application and the technical principle in use. Those skilled in the art should understand that, the scope of invention of this application is not limited to the technical solution formed by a specific combination of the foregoing technical features, but should cover other technical solutions formed by any combination of the foregoing technical features or equivalent features thereof without departing from the foregoing inventive concept, for example, the above feature has a similar function disclosed in (but not limited to) this application.

## Claims

1. A compressor, comprising: a rotor, a stator, a coil, a shell, an impeller and at least one main gas passage, wherein
the stator and the coil are sleeved on the rotor, the shell covers the stator and the coil, the shell is enclosed at a tail end of the compressor to form a high-pressure chamber, the impeller is sleeved at a tail end of the rotor and faces toward a gas intake direction, the main gas passage surrounds the stator, and an outlet at a tail end of the main gas passage is connected to the high-pressure chamber through the impeller.

2. The compressor according to claim 1, wherein the shell comprises a first shell, a second shell and a third shell, and the main gas passage comprises a first gas passage or/and a third gas passage;
the first shell covers the stator and the coil, the stator is fixed with the first shell, a front end and a tail end of the first shell are respectively provided with a first front end cover and a first rear end cover, the second shell surrounds the first shell, a second end cover is provided at a tail end of the second shell, and the third shell is provided at the tail end of the compressor, and enclosed with the second end cover to form the high-pressure chamber;
a chamber between the first shell and the second shell, and a chamber between the first rear end cover and the second end cover are formed into the first gas passage; and
the third gas passage axially penetrates through the stator.

3. The compressor according to claim 2, wherein the compressor further comprises a second gas passage; and
a clearance between the stator and the coil and an outer wall of the rotor, a clearance between the stator and the coil and the first front end cover, and a clearance between the stator and the coil and the first rear end cover are formed into the second gas passage, and the second gas passage comprises an inlet provided at a front end of the first shell or on the first front end cover, and an outlet provided on the first rear end cover and communicating with the first gas passage or/and the third gas passage.

4. The compressor according to claim 1, wherein a radial bearing is provided at two ends of the rotor to support the stator; and
the radial bearing is one selected from the group consisting of a static pressure gas bearing, a dynamic pressure gas bearing and a dynamic and static pressure hybrid gas bearing.

5. The compressor according to claim 4, wherein an annular rubber ring damper is sleeved at two ends of the radial bearing.

6. The compressor according to claim 1, wherein a gas intake end of the rotor is provided with a first thrust collar and a second thrust collar, the two thrust collars each comprise a collar portion and a bushing portion, the bushing portion of each of the two thrust collars is fixed on the rotor by docking, a thrust groove is formed between an inner end surface of each of the two thrust collars and an outer portion of the bushing portion, and a thrust bearing is provided in the thrust groove; and
a portion of a top of the thrust bearing is protruded out of the thrust groove and two sides of the portion are respectively clamped by a cover and the shell, and the cover is fixedly connected to the shell.

7. The compressor according to claim 6, wherein the thrust bearing is a dynamic and static pressure hybrid air bearing; and
the thrust bearing comprises a first thrust portion and a second thrust portion, the first thrust portion is opposite to the second thrust portion, an annular chamber is formed in an inside end surface of the second thrust portion, and the annular chamber communicates with an external gas; and a first clearance between an inside end surface of the first thrust collar and an outside end surface of the first thrust portion communicates with the annular chamber through a gas hole, a second clearance between an inside end surface of the second thrust collar and an outside end surface of the second thrust portion communicates with the annular chamber through a gas hole, a third clearance between an inner sidewall of the second thrust portion and a sidewall of the thrust groove communicates with the annular chamber through a gas hole, and a gas intake pipe on the shell communicates with the annular chamber through a gas intake passage on the second thrust portion.

8. The compressor according to claim 7, wherein a spring damper or a rubber ring damper is provided between an outer end surface of the first thrust portion and the cover, and between an outer end surface of the second thrust portion and the shell; and/or
the spring damper or the rubber ring damper is provided between an inner end surface of the first thrust portion and an inner end surface of the second thrust portion.

9. The compressor according to claim 7, wherein an air slot is formed in the outer end surface of each of the first thrust portion and the second thrust portion; and/or the air slot is formed in a surface of each of the two thrust collars, where the surface is opposite to the outer end surface of each of the first thrust portion and the second thrust portion.

10. A rotor system, comprising the compressor according to any one of claims 1 to 9.

11. A microturbine, comprising the compressor according to any one of claims 1 to 9.
